# EUROPÄISCHE PATENTANMELDUNG

(11) **EP 1 116 989 A2**
(43) Veröffentlichungstag der Anmeldung: **18.07.2001**
(21) Anmeldenummer: 01200013.9
(22) Anmeldetag: 05.01.2001
(51) Int. Cl.: G02F 1/13357

(54) **Flüssigkristallfarbbildschirm mit Leuchtstoffschicht**

(30) Priorität: 14.01.2000 DE 10001188
(71) Anmelder: Philips Corporate Intellectual Property GmbH, 52064 Aachen (DE); Koninklijke Philips Electronics N.V., 5621 BA Eindhoven (NL)
(72) Erfinder: Bechtel, Helmut, Dr., 52064 Aachen (DE); Jüstel, Thomas, Dr., 52064 Aachen (DE); Nikol, Hans, Dr., 52064 Aachen (DE); Ronda, Cornelis, Dr., 52064 Aachen (DE)
(74) Vertreter: Volmer, Georg, Dipl.-Ing.

(57) **Zusammenfassung**

Flüssigkristallfarbbildschirm, ausgerüstet mit einem elektro-optischem Medium (1), zwei parallelen transparenten Substraten, die das elektro-optische Medium flankieren, Mittel (4 und 5) zur Beeinflussung des Transmissionszustandes des elektro-optischen Mediums, einer Leuchtstoffschicht (6), die mindestens zwei Leuchtstoffe enthält, auf dem ersten Substrat, einer Strahlungsquelle (7) für Strahlung mit einer maximalen Emission bei einer Wellenlänge λ₁ < 360nm auf der Seite des zweiten Substrates und Mittel zur Transformation der Strahlung mit einer maximalen Emission bei einer Wellenlänge λ₁ < 360nm in Strahlung mit einer maximalen Emission bei einer Wellenlänge λ₂ > 360nm.

## Beschreibung

Die Erfindung betrifft einen Flüssigkristallfarbbildschirm, ausgerüstet mit einem elektro-optischem Medium, zwei parallelen transparenten Substraten, die das elektro-optischen Medium flankieren, Mittel zur Beeinflussung des Transmissionszustandes des elektro-optischen Mediums, einer Leuchtstoffschicht, die mindestens zwei Leuchtstoffe enthält, auf dem ersten Substrat und einer Strahlungsquelle für Strahlung mit einer maximalen Emission bei einer Wellenlänge λ₁ < 360 nm auf der Seite des zweiten Substrates.

Das Prinzip eines Flüssigkristallbildschirms beruht darauf, dass sich die Molekülorientierung von flüssigen, sich optisch wie doppelbrechende Kristalle verhaltenden, organischen Substanzen durch Anlegen eines elektrischen Feldes so steuern lässt, dass von außen auffallendes linear polarisiertes Licht ein seiner Polarisationsrichtung beeinflusst wird.

Ein konventionellen Flüssigkristallbildschirm besteht üblicherweise aus zwei Glasplatten, die jeweils an ihren Innenseiten mit einer transparenten Elektrode aus Indium-Zinn-Oxid (ITO) beschichtet sind. Bei TN-Flüssigkristallbildschirmen (TN = twisted nematic) erhalten die Flüssigkristallmoleküle durch Orientierungsschichten eine um 90° zwischen den beiden Glasplatten verdrehte Randorientierung. Dadurch stellt sich eine 90° - Helix in den Flüssigkristallmolekülen ein. Gekreuzte Polarisatoren auf den Außenflächen der Glasplatten und eine flächige Hintergrundbeleuchtung vervollständigen den Bildschirm. Solange an den beiden ITO-Elektroden keine elektrische Spannung anliegt, kann das vom ersten Polarisator linear polarisierte Licht der Hintergrundbeleuchtung der 90°-Verdrehung der Flüssigkristallmoleküle folgen und anschließend den zweiten Polarisator passieren; der Bildschirm erscheint hell. Beim Anlegen einer genügend hohen Spannung wird durch die elektrische Anisotropie der Flüssigkristallmoleküle die Helix aufgehoben und die Polarisationsrichtung bleibt unbeeinflusst; das polarisierte Licht wird am zweiten Polarisator geblockt und die Zelle erscheint dunkel.

Ein komplette Bild wird aus einer Vielzahl von Einzelelementen zusammengesetzt, die jeweils als Lichtventile über eine Matrix angesteuert werden. Man unterscheidet bei der Ansteuerung zwischen passiver und aktiver Matrix. Die Mehrzahl der derzeit weltweit produzierten Flüssigkristallanzeigen werden durch eine passive Matrix angesteuert, die transparente Streifenelektroden auf beiden Glasplatten erforderlich machen.
Bei Flüssigkristallbildschirmen mit aktiver Matrix ist jedem Bildelement (Pixel) ein eigener Schalter zugeordnet, der aus einem Dünnfilmtransistor (TFT) oder einer Dünnfilmdiode (TFD) bestehen kann. Flüssigkristallbildschirme mit aktiver Matrix zeigen insgesamt einen besseren Kontrast und höhere Farbsättigung und haben eine niedrigere Ansprechzeit.
Bei farbigen Flüssigkristallbildschirmen setzt sich das Bildelement jeweils aus drei, jeweils einzeln angesteuerten Elementen für die Farben Rot, Blau, Grün zusammen. Die Farbwiedergabe erfolgt in konventionellen Flüssigkristallbildschirmen durch Mosaikfarbfilter, die auf die frontseitige Glasplatte aufgedruckt sind.

Eine Nachteil der konventionellen Flüssigkristallfarbbildschirme mit Farbfilterschichten ist es, dass der Bildschirm nur unter bestimmten Blickwinkeln betrachtet werden kann und dass Farbsättigung, Leuchtkraft und Helligkeit Werte haben, die deutlich unter denen von CRT-Bildschirmen liegen.

Höhere Leuchtkraft und einen größeren Betrachtungswinkel haben Flüssigkristallfarbbildschirme, die eine Leuchtstoffschicht umfassen.

Beispielsweise ist aus US 4 822 144 ein Flüssigkristallfarbbildschirm bekannt, der im Transmissionsmodus betrieben wird und auf einer Kombination von Flüssigkristallschaltelementen und einer Leuchtstoffschicht beruht, wobei die Leuchtstoffschicht von einer UV-Lichtquelle angeregt wird und die Helligkeit des Bildschirms durch ein Interferenzfilter zwischen Lichtquelle und Leuchtstoffschicht erhöht wird. Leuchcstoffschicht und UV-Quelle können an zwei, voneinander abgewandten Seiten der Flüssigkristallschaltelemente liegen. Die UV-Quelle kann eine Quecksilberhochdruckgasentladungslampe, die mit einer maximalen Emission zwischen 360 und 380 nm abstrahlt, oder eine Quecksilberniederdruckgasentladungslampe, die Licht mit einer maximalen Emission bei 254 nm abstrahlt, gewählt werden.

Es ist ein Nachteil einer Hintergrundbeleuchtung mittels einer Quecksilber-Hochdrucklampe, die eine maximale Emission bei Wellenlängen zwischen 360 und 380 nm hat, dass neben den kurzwelligen Anteilen auch Licht mit beträchtlicher Intensität bei 408, 435 und 546 nm emittiert wird. Dies führt zu einer unvollständigen Aufspaltung in die drei Primärfarben Rot, Grün und Blau in den Leuchtstoffen und zu chromatischer Aberration des auf dem Projektionsschirm erzeugten Projektionsbildes.

Es ist ein Nachteil einer Hintergrundbeleuchtung mittels einer Quecksilber-Niederdrucklampe mit einer maximalen Emission bei einer Wellenlänge von 254nm, dass Licht dieser Wellenlänge im Flüssigkristallmaterial absorbiert wird und zu photochemischen Reaktionen führt, die mit der Zeit das Flüssigkristallmaterial zerstören können.

Es ist die Aufgabe der vorliegenden Erfindung, einen Flüssigkristallfarbbildschirm zur Verfügung zu stellen, der ein farbreines Bild erzeugt und eine lange Lebensdauer hat.

Erfindungsgemäß wird die Aufgabe gelöst durch einen Flüssigkristallfarbbildschirm, ausgerüstet mit einem elektro-optischem Medium, zwei parallelen transparenten Substraten, die das elektro-optischen Medium flankieren, Mittel zur Beeinflussung des Transmissionszustandes des elektro-optischen Mediums, eine Leuchtstoffschicht mit mindestens zwei Leuchtstoffen auf dem ersten Substrat und eine Strahlungsquelle für Strahlung mit einer maximalen Emission bei einer Wellenlänge λ₁ < 360 nm auf der Seite des zweiten Substrates und Mittel zur Transformation der Strahlung mit einer maximalen Emission bei einer Wellenlänge λ₁ < 360 nm in Strahlung mit einer maximalen Emission bei einer Wellenlänge λ₂ > 360 nm.
Dadurch wird die Farbreinheit der Farbbildpunkte und damit die farbgetreue vollständige Farbmischung auf dem Farbbildschirm verbessert. Photochemische Reaktionen des Hintergrundlichtes mit dem elektro-optischen Medium werden vermieden.

Nach einer bevorzugten Ausführungsform der Erfindung ist das Mittel zur Transformation der Strahlung ein UV-Leuchtstoff.

Der UV-Leuchtstoff kann ausgewählt sein aus der Gruppe Ca_{2,45}B_{5.5}P₂O_{15.75}:Ce³⁺,Li⁺; SrB₄O₇:Eu²⁺; Sr₃(PO₄)₂:Sn²⁺ ; Ba₂Mg(BO₃)₂:Pb²⁺ ; LaGd(BO₃)₂:Ce²⁺; CaSO₄:Eu²⁺; ZnO:Ga ³⁺; CaO:Bi³⁺; (Sr,Mg)₂P₂O₇:Eu²⁺; CaB₂P₂O₉:Eu²⁺ und Sr₂P₂O₇:Eu²⁺.

Nach einer besonders bevorzugten Ausführungsform der Erfindung ist die Strahlungsquelle für Strahlung mit einer maximalen Emission bei einer Wellenlänge λ₁ < 360 nm Quecksilberniederdrucklampe. Eine Hintergrundbeleuchtung mit einer Quecksilberniederdrucklampe hat sich als besonders vorteilhaft erwiesen, weil sie die UV-Leuchtstoffe besonders effizient anregt.

Es kann auch bevorzugt sein, dass das elektro-optische Medium ein Flüssigkristallzellmedium mit einer Drehung zwischen 180° und 360° ist.

In einer Variante des Flüssigkristallfarbbildschirms enthält die Leuchtstoffschicht einen roten Leuchtstoff, ausgewählt aus der Gruppe Y(V,P,B)O₄:Eu; Mg₄GeO₅₅F:Mn; YNbO₄:Eu³⁺; Y₂O₂S:Eu³⁺; Eu(ttfa)₃(Clphen) Eu(ttfa)₃(phen) und Eu(tfnb)₃(dpphen). Die mit diesem Leuchtstoffen erreichte Leuchtstärke im roten Bereich und der damit erzielte , optische Wirkungsgrad ist besonders hoch.

In einer anderen Variante des Flüssigkristallfarbbildschirms enthält die Leuchtstoffschicht einen blauen Leuchtstoff, ausgewählt aus der Gruppe BaMgAl₁₀O₂₇:Eu,
Die mit diesem Leuchtstoffen erreichte Leuchtstärke im blauen Bereich und der damit erzielte, optische Wirkungsgrad ist besonders hoch.

In einer weiteren Variante des Flüssigkristallfarbbildschirms enthält die Leuchtstoffschicht einen grünen Leuchtstoff, ausgewählt aus der Gruppe BaMgAl₁₀O₂₇:Mn,Eu; Tb(bph4COO)₃(HOEt)₂, Tb(dmbtacn)₃(HOEt)₂ und Tb(benz)₃(HOEt)₂. Die mit diesem Leuchtstoffen erreichte Leuchtstärke im grünen Bereich und der damit erzielte, optische Wirkungsgrad ist besonders hoch.

Nachfolgend wird die Erfindung einer Figur weiter erläutert.

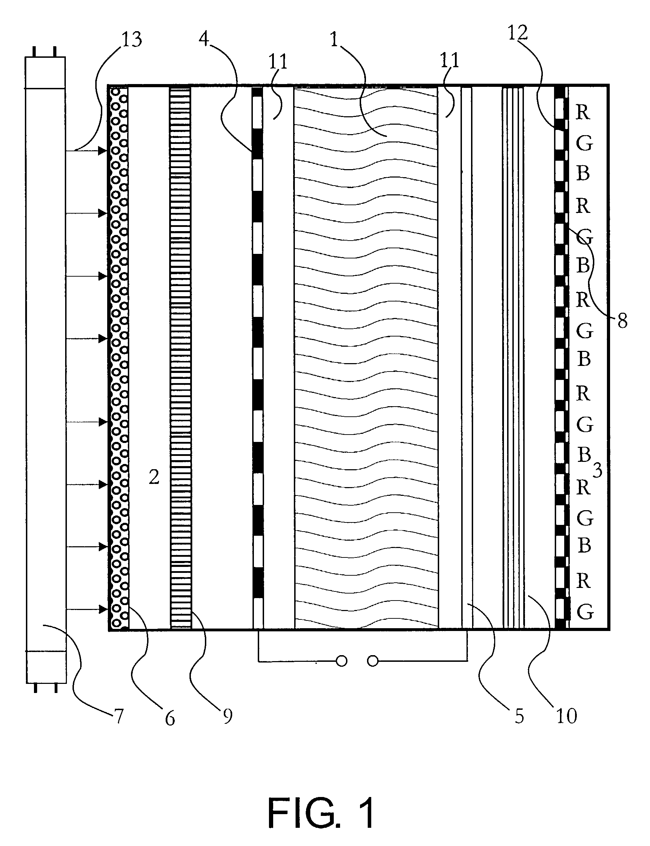

Fig. 1 zeigt einen Schnitt durch einen Flüssigkristallfarbbildschirm nach einer Ausführungsform der Erfindung.

Ein Flüssigkristallfarbbildschirm nach der Erfindung ist ausgerüstet mit einem elektro-optischem Mediuml zwei parallelen transparenten Substraten 2 und 3, die das elektro-optischen Medium flankieren, Mittel zur Beeinflussung des Transmissionszustandes des elektro-optischen Mediums 4 und 5, eine Leuchtstoffschicht mit mindestens'zwei Leuchtstoffen auf dem ersten Substrat 6 und eine Strahlungsquelle 7 für Strahlung 13 mit einer maximalen Emission bei einer Wellenlänge λ₁ < 360 nm auf der Seite des zweiten Substrates und Mittel zur Transformation der Strahlung mit einer maximalen Emission bei einer Wellenlänge λ₁ < 360 nm in Strahlung mit einer maximalen Emission bei einer Wellenlänge λ₂ > 360 nm.

Nach einer Ausführungsform der Erfindung können die beiden Substrate die Substrate aus Glas bestehen. Sie sind transparent für langwelliges UV-Licht mit einer Wellenlänge > 380 nm und sichtbarem Licht. Die Substrate sind an ihrer Peripherie mit einer Dichtung verschlossen, die z. B. aus einem Klebstoff besteht. die Substrate und die Dichtung schließen einen Raum ein, der durch das elektro-optische Medium gefüllt ist.

Für das elektro-optische Medium können verschiedene Flüssigkristallmaterialien gewählt werden. Zum Beispiel kann ein "twisted nematic"-Material mit einer Drehung von 90° für ein 'TN-LCD oder ein "super twisted nematic"-Material mit einer Drehung von 180 bis 270° für ein STN-LCD gewählt werden oder aber ein doppelbrechendes Material mit einer Drehung von 270° ("super twisted birefringence") für ein SBE-LCD. Auch ferroelektrische Flüssigkristallmaterialien sind geeignet.

An den Oberflächen der Substrate, die in Berührung mit dem elektro-optischem Medium stehen, sind die Substrate mit transparenten Elektrodenstreifen 4 und 5 beschichtet, die sich senkrecht überschneiden und eine Matrix von Schaltungspunkten bilden. Die Elektroden können zum Beispiel aus ITO bestehen. Die Elektroden sind mit einer Orientierungsschicht 11 aus orientiert abgeschiedenen (obliquely evaporated) Siliziumoxid bedeckt. Weiterhin ist auf dem ersten Substrat ein Polarisator 9 und auf dem zweiten Substrat ein Analysator 10 angeordnet.

Eine Quecksilberhochdrucklampe 7, die UV-Licht mit einer Wellenlänge von 370 nm ausstrahlt, ist auf der Seite des Substrates 2 angeordnet.

Nach einer bevorzugten Ausführungsform der Erfindung ist das Mittel zur Transformation der Strahlung ein UV-Leuchtstoff.

Der UV-Leuchtstoff kann ausgewählt sein aus der Gruppe Ca_{2.45}B_{5 5}P₂O_{15 75}:Ce³⁺,Li⁺; SrB₄O₇:Eu²⁺; Sr₃(PO₄)₂:Sn²⁺; Ba₂Mg(BO₃)₂:Pb²⁺, LaGd(BO₃)₂:Ce²⁺; CaSO₄:Eu²⁺; ZnO:Ga³⁺; CaO:Bi³⁺; (Sr,Mg)₂P₂O₇:Eu²⁺; CaB₂P₂O₉:Eu²⁺ und Sr₂P₂O₇:Eu²⁺. Diese UV-Leuchtstoffe werden effektiv durch das von der Hintergrundbeleuchtung eintretende UV-Licht mit einer Wellenlänge λ₁ < 360 nm angeregt und emittieren UV-Licht mit einer Wellenlänge λ₂ > 360 nm mit hoher Fluoreszenz-Quantenausbeute emittieren. UV-Licht mit einer Wellenlänge λ₂ > 360 nm verursacht keine photochemischen Reaktionen in dem Flüssigkristallmaterial. In Tabelle 1 sind für diese UV-Leuchtstoffe jeweils die Wellenlänge des Emissionsmaximums Eₘ[nm] , die Breite der Emission FWHM[nm] und die Quantenausbeute QE angegeben.

**Tab. 1**

| Leuchtstoff | Em[nm] | FWHM [nm] | QE [%] |
|---|---|---|---|
| Ca_{2,45}B_{5.5}P₂O_{15.75}:Ce³⁺,Li⁺ | 365 | 53 | 95 |
| SrB₄O₇:Eu²⁺ | 370 | 19 | 92 |
| Sr₃(PO₄)₂:Sn²⁺ | 378 | 65 | 30 |
| Ba₂Mg(BO₃)₂:Pb²⁺ | 380 | 51 | 60 |
| LaGd(BO₃)₂:Ce²⁺; | 380 | 60 | 65 |
| CaSO₄:Eu²⁺ | 388 | 12 | 99 |
| ZnO:Ga ³ | 388 | 15 | |
| CaO:Bi³⁺ | 391 | 29 | |
| (Sr,Mg)₂P₂O₇:Eu²⁺ | 392 | 26 | 90 |
| CaB₂P₂O₉:Eu²⁺ | 403 | 21 | 90 |
| Ca₃(PO₄)₂:Eu | 412 | 33 | |

Zwischen der Hintergrundbeleuchtung und dem Mittel zur Transformation der Wellenlänge kann ein Kollimator angebracht werden, um Kontrast, Farbreinheit und Effizienz des Flüssigkristallfarbbildschirms zu verbessern.

Das frontseitige Substrat 3 auf der dem Betrachter zugewandten Seite ist auf der an das elektro-optische Medium angrenzenden Oberfläche mit einer Leuchtstoffschicht ausgestattet. Die Leuchtstoffschicht setzt sich aus einem Mosaikmuster von Bildelementen zusammen, die jeweils einem Schaltungspunkt zugeordnet sind und Fluoreszenzlicht in Rot, Grün oder Blau emittieren, wenn sie von dem UV-Licht, das von der Schicht mit einem UV-Leuchtstoff ausgestrahlt wird, angeregt werden.

Effiziente Leuchtstoffe zur Erzeugung des sichtbaren Lichtes aus langwelligem UV-Licht sind für den roten Bereich (V,P,B)O₄:Eu, Mg₄GeO₅₅F:Mn, YNbO₄:Eu³⁺; Y₂O₂S:Eu³⁺ Y₂O₂S:Eu³⁺ ,Eu(ttfa)₃(phen) ,Eu(ttfa)₃(Clphen) und Eu(tfnb)₃(dpphen)., für den blauen Bereich BaMgAl₁₀O₁₇:Eu, Coumarin 4, Coumarin 47 und Coumarin 102 und für den grünen Bereich BaMgAl₁₀O₂₇:Mn,Eu, Tb(bph4COO)₃(HOEt)₂, Tb(dmbtacn)₃(HOEt)₂ und Tb(benz)₃(HOEt)₂

**Tab. 2 :**

| Rote Leuchtstoffe | | | | | |
|---|---|---|---|---|---|
| rot | x | y | Peak Eₘ[nm] | QE[%] | FWHM [nm] |
| Y(V,P,B)O₄:Eu | .659 | .341 | 615 | | Linie |
| Mg₄GeO₅₅F:Mn | .713 | .287 | 655 | | 16 |
| YnbO₄:Eu³⁺; | .659 | .341 | 615 | | Linie |
| Y₂O₂S:Eu³⁺ | .666 | .330 | 627 | | Linie |
| Eu(ttfa)₃(Clphen) | .652 | .330 | 618 | 75 | |
| Eu(ttfa)₃(phen) | .652 | .329 | 619 | 72 | |
| Eu(tfnb)₃(dpphen) | .657 | .326 | 618 | 64 | |
| ttfa = 1-(2-Thenoyl)-4,4,4-trifluor-1,3,butandithionat | | | | | |
| tfnb = 4,4,4-Trifluor-1-(2-naphtyl)-1,3-butandithionat | | | | | |
| Clphen =5-Chlor-1,10-Phenanthrolin | | | | | |
| phen = 1,10-Phenanthrolin | | | | | |
| dpphen =4,7-Diphenyl-1,10-Phenanthrolin | | | | | |

**Tab.3:**

| Blaue Leuchtstoffe | | | | | | |
|---|---|---|---|---|---|---|
| **blau** | x | y | Peak Eₘ | Peak Abs | FWHM [nm] | QE [%] |
| BaMgAl₁₀O₁₇:Eu | .148 | .053 | 447 | | 51 | |
| Coumarin 4 | | | 445 | 372 | | > 90% |
| Coumarin 47 | | | 450 | 373 | | |
| Coumarin 102 | | | 465 | 389 | | |
| Coumarin 4 = 7-Hydroxy-4-methylcoumarin | | | | | | |
| Coumarin 47 = 7-Diethylamino-4-Methylcoumarin | | | | | | |
| Coumarin 102 = 2,3,5,6-1H,4H-Tetrahydro-8-methylquinolizino-[9,9a,1-gh]-coumarin | | | | | | |

**Tab. 4:**

| Grüne Leuchtstoffe | | | | | |
|---|---|---|---|---|---|
| **grün** | x | y | FWHM [nm] | Peak Eₘ[nm] | QE[nm] |
| BaMgAl₁₀O₂₇:Mn,Eu | .126 | .65 | 27 | 514 | |
| Tb(bph4COO)₃(HOEt)₂ | .324 | .598 | | 549 | 70 |
| Tb(dmbtacn)₃(HOEt)₂ | .332 | .603 | | 549 | 70 |
| Tb(benz)₃(HOEt)₂ | .325 | .604 | | 549 | 61 |
| bph4COO = Benzophenon -4-carbonat | | | | | |
| dmbtacn = Dimethylbenzoyltriazocycloat | | | | | |
| benz = benzoat | | | | | |

Die Leuchtstoffschichten, die wahlweise als Punkte oder Streifen angebracht werden, können weiterhin durch eine schwarze Matrix 12 umrandet werden, um Kontrast und Farbreinheit zu verbessern.

Auch durch Einfärbung des frontseitigen Substrates 3 ist es möglich, den Kontrast bei Umgebungslicht zu verbessern.

Weiterhin ist es möglich zwischen dem elektro-optischen Medium und der Leuchtstoffschicht 6 eine dielektrische Beschichtung vorzusehen, die für UV-Licht transparent ist und sichtbares Licht reflektiert.

Im Betrieb wird entsprechend dem gewünschten Bild eine Spannung zwischen den Elektroden und angelegt. In dem Teil des elektro-optischen Mediums das zwischen nicht geschalteten Schaltungspunkten liegt oder wo die Spannung niedriger ist als die Schwellenspannung haben die Flüssigkristallmoleküle eine verdrillte Struktur mit einer Drehung von 90° über den Querschnitt der Zelle. In dem Teil des elektro-optischen Mediums das zwischen geschalteten Schaltungspunkten liegt oder wo die Spannung höher ist als die Schwellenspannung, haben die Flüssigkristallmoleküle eine gestreckte Struktur ohne oder mit nur geringfügiger Drehung über den Querschnitt der Zelle.

Die unpolarisierte UV-Strahlung mit einer Wellenlänge λ₁ < 360 nm, das von der Quecksilber-Niederdrucklampe 7 erzeugt wird, wird in der Leuchtstoffschicht 8, von dem UV-Leuchtstoff, der als Transformator für diese UV-Strahlung wirkt, absorbiert und als Licht mit einer höheren Wellenlänge von λ₂ > 360 nm wieder emittiert. An den Stellen in dem elektro-optischen Medium, an den keine Spannung angelegt ist, durchquert die erzeugte Strahlung den Polarisator, das Flüssigkristallmedium und den Analysator und trifft in der Leuchtstoffschicht 6 auf ein rotes grünes oder blaues Pixel. Die Pixel in der Leuchtstoffschicht sind den Schaltungspunkten zugeordnet und an ihnen ausgerichtet. Die durch das langwellige UV-Licht angeregten Leuchtstoffe strahlen dann sichtbares Licht in einer der Farben Rot, Grün oder Blau aus.

## Patentansprüche

1. Flüssigkristallfarbbildschirm, ausgerüstet mit einem elektro-optischem Medium, zwei parallelen transparenten Substraten, die das elektro-optischen Medium flankieren, Mittel zur Beeinflussung des Transmissionszustandes des elektro-optischen Mediums, einer Leuchtstoffschicht, die mindestens zwei Leuchtstoffe enthält, auf dem ersten Substrat, einer Strahlungsquelle für Strahlung mit einer maximalen Emission bei einer Wellenlänge λ₁ < 360 nm auf der Seite des zweiten Substrates und Mittel zur Transformation der Strahlung mit einer maximalen Emission bei einer Wellenlänge λ₁ < 360 nm in Strahlung mit einer maximalen Emission bei einer Wellenlänge λ₂ > 360 nm.

2. Flüssigkristallfarbbildschirm gemäß Anspruch 1,
dadurch gekennzeichnet,
dass das Mittel zur Transformation der Strahlung ein UV-Leuchtstoff ist.

3. Flüssigkristallfarbbildschirm gemäß Anspruch 1,
dadurch gekennzeichnet,
dass das Mittel zur Transformation der Strahlung ein UV-Leuchtstoff ausgewählt aus der Gruppe Ca_{2,45}B₅₅P₂O_{15 75}:Ce³⁺,Li⁺; SrB₄O₇:Eu²⁺; Sr₃(PO₄)₂:Sn²⁺ ; Ba₂Mg(BO₃)₂:Pb²⁺; LaGd(BO₃)₂:Ce²⁺; CaSO₄:Eu²⁺; ZnO:Ga³⁺; CaO:Bi³⁺; (Sr,Mg)₂P₂O₇:Eu²⁺; CaB₂P₂O₉:Eu²⁺ und Sr₂P₂O₇:Eu²⁺.

4. Flüssigkristallfarbbildschirm gemäß Anspruch 1,
dadurch gekennzeichnet,
dass die Strahlungsquelle für Strahlung mit einer maximalen Emission bei einer Wellenlänge λ₁ < 360 nm Quecksilberniederdrucklampe ist.

5. Flüssigkristallfarbbildschirm gemäß Anspruch 1,
dadurch gekennzeichnet,
dass das elektro-optische Medium ein Flüssigkristallzellmedium mit einer Drehung zwischen 180° und 360° ist.

6. Flüssigkristallfarbbildschirm gemäß Anspruch 1,
dadurch gekennzeichnet,
dass die Leuchtstoffschicht einen roten Leuchtstoff, ausgewählt aus der Gruppe Y(V,P,B)O₄:Eu; Mg₄GeO₅₅F:Mn; YNbO₄:Eu³⁺; Y₂O₂S:Eu³⁺; Eu(ttfa)₃(Clphen) Eu(ttfa)₃(phen) und Eu(tfnb)₃(dpphen) enthält.

7. Flüssigkristallfarbbildschirm gemäß Anspruch 1,
dadurch gekennzeichnet,
dass die Leuchtstoffschicht einen blauen Leuchtstoff, ausgewählt aus der Gruppe BaMgAl₁₀O₂₇:Eu, 7-Hydroxy-4-methylcoumarin, 7-Diethylamino-4-Methylcoumarin und 2,3,5,6-1H,4H-Tetrahydro-8-methylquinolizino-[9,9a,1-gh]-coumarin enthält.

8. Flüssigkristallfarbbildschirm gemäß Anspruch 1,
dadurch gekennzeichnet,
dass die Leuchtstoffschicht einen grünen Leuchtstoff, ausgewählt aus der Gruppe BaMgAl₁₀O₂₇:Mn,Eu, Tb(bph4COO)₃(HOEt)₂, Tb(dmbtacn)₃(HOEt)₂ und Tb(benz)₃(HOEt)₂ enthält.
